# EUROPEAN PATENT APPLICATION

(11) **EP 2 775 589 A1**
(43) Date of publication of application: **10.09.2014**
(21) Application number: 12845036.8
(22) Date of filing: 31.10.2012
(51) Int. Cl.: H02J 17/00, C09D 5/25, C09D 7/12, C09D 107/00, C09D 109/00, C09D 123/06, C09D 123/12, C09D 127/12, C09D 133/00, C09D 163/00, C09D 167/00, C09D 169/00, C09D 175/04, C09D 179/08, C09D 183/04, C09D 201/00, H01B 1/24

(54) **TRANSMISSION SHEET, TRANSMISSION UNIT, AND NON-CONTACT ELECTRIC-POWER TRANSMISSION SYSTEM PROVIDED THEREWITH**

(30) Priority: 31.10.2011 JP 2011238968; 14.03.2012 JP 2012057956
(71) Applicant: Showa Denko K.K., Tokyo 105-8518 (JP)
(72) Inventor: KOYAMA Tamami, Tokyo 105-8518 (JP); TOKITA Koji, Tokyo 105-8518 (JP); MITSUMOTO Ryuichi, Tokyo 105-8518 (JP); TAMINO Yasuaki, Tokyo 105-8518 (JP); NISHIOKA Ayako, Tokyo 105-8518 (JP)
(74) Representative: Strehl Schübel-Hopf & Partner
(86) International application number: PCT/JP2012/078216
(87) International publication number: WO 2013/065756

(57) **Abstract**

Provided is a transmission sheet constituting a transmission unit used for a non-contact power transmission system, wherein the transmission sheet comprises a functional composite material layer wherein the functional composite material layer is obtained by dispersing conductive filler in a polymer material, wherein an amount of the conductive filler added in the functional composite material layer is 90 parts by mass or less with respect to 100 parts by mass of the polymer material, and wherein a conductivity of the functional composite material layer is 10 S/m or higher.

## Description

### TECHNICAL FIELD

The present invention relates to a transmission sheet, a transmission unit, and a non-contact power transmission system including the same.

Priority is claimed on Japanese Patent Application No. 2011-238968, filed October 31, 2011 and Japanese Patent Application No. 2012-057956, filed March 14, 2012, the contents of which are incorporated herein by reference.

### BACKGROUND ART

Electric field coupling type non-contact power transmission techniques (for example, see Patent Documents 1 to 3) are disclosed in which a transmission electrode and a reception electrode are arranged to be close to or in close contact with each other to form a capacitor, and power is transmitted from a transmission side to a reception side through the capacitor (coupling capacitor).

In order to increase a capacitance and improve power transmission efficiency in a non-contact power transmission system, a technique of using a dielectric layer between electrodes of a coupling capacitor is disclosed (for example, see Patent Document 4).

### PRIOR ART DOCUMENTS

### Patent Documents

[Patent Document 1] Japanese Unexamined Patent Application, First Publication No. 2009-89520
[Patent Document 2] Published Japanese Translation No. 2009-531009 of the PCT International Publication
[Patent Document 3] Japanese Unexamined Patent Application, First Publication No. 2011-259649
[Patent Document 4] Japanese Unexamined Patent Application, First Publication No. 2012-5171

### SUMMARY OF THE INVENTION

### Problems to be solved by the Invention

A non-contact power transmission system such as an electric field coupling type non-contact power transmission system has been already put into practice, and the development of a material and a configuration of a coupling capacitor which is optimized for power transmission has been desired.

In particular, the capacitance of a coupling capacitor (hereinafter, abbreviated as "electrostatic capacitance") depends on the contact area between a transmission electrode and a reception electrode. However, when the shapes of contact surfaces of both electrodes do not match each other, the contact surfaces are only partially in contact (close contact) with each other, and thus the contact area is decreased. Therefore, there is a problem in that sufficient capacitance is not obtained.

Further, in non-contact power transmission systems such as an electric field coupling type non-contact power transmission system, it is considered that, in many cases, a reception electrode is used in a state of being embedded inside a casing of a power receiving body such as a mobile phone or a PC. Therefore, a dielectric sheet with a high dielectric constant (relative permittivity) formed on an electrode is developed, but a casing, that is, an insulating layer with a low dielectric constant is coated on the surface of the dielectric sheet. As a result, the high relative dielectric constant cannot be utilized. That is, even when a high dielectric layer is inserted between transmission and reception electrodes to increase the electrostatic capacitance, since an insulating layer with low dielectric constant, that is, a casing is inserted there between, the capacitance of a coupling capacitor is significantly decreased. Therefore, the performance of a high output transmission sheet is inhibited from being exhibited. In addition, many systems use a transmission electrode having a configuration in which a casing (insulating layer with a low dielectric constant) of a power receiving body such as a mobile phone or a PC is directly coated on an exposed metal electrode without using a high relative dielectric constant layer. In this configuration, due to the intrinsic rigidity of metal, the contact between the metal electrode and the casing is not sufficient, and the contact between the transmission electrode and the reception electrode is also not sufficient. Therefore, it is difficult to realize high output.

The present invention has been made in consideration of the above-described circumstances, and an object thereof is to provide a transmission unit used for a non-contact power transmission system which includes a coupling capacitor capable of realizing high capacitance and high transmission efficiency, a transmission sheet constituting the transmission unit, and a non-contact power transmission system including the same. In particular, regarding the transmission sheet, an object of the present invention is to provide a transmission sheet capable of realizing high output even in the presence of a casing (low dielectric insulating layer).

### Means for Solving the Problems

In order to achieve the above-described objects, the present invention provides the following means.
(1) A transmission sheet constituting a transmission unit used for a non-contact power transmission system which can transmit power by arranging a transmission electrode and a reception electrode to be close to each other, wherein the transmission sheet consists of a functional composite material layer; wherein the functional composite material layer is obtained by dispersing conductive filler in a polymer material, wherein an amount of the conductive filler added in the functional composite material layer is 90 parts by mass or less with respect to 100 parts by mass of the polymer material, and wherein a conductivity of the functional composite material layer is 10 S/m or higher.
(2) The transmission sheet used for a non-contact power transmission system according to (1), in which the conductive filler is composed of a carbon material.
(3) The transmission sheet used for a non-contact power transmission system according to (1) or (2), further comprising inorganic filler.
(4) A transmission sheet constituting a transmission unit used for a non-contact power transmission system which can transmit power by arranging a transmission electrode and a reception electrode to be close to each other, wherein the transmission sheet comprises a functional composite material layer and a first insulating layer in this order; wherein the functional composite material layer is obtained by dispersing conductive filler in a polymer material, wherein an amount of the conductive filler added in the functional composite material layer is 90 parts by mass or less with respect to 100 parts by mass of the polymer material, and wherein a conductivity of the functional composite material layer is 10 S/m or higher.
(5) The transmission sheet used for a non-contact power transmission system according to (4), in which the conductive filler is composed of a carbon material.
(6) The transmission sheet used for a non-contact power transmission system according to (4) or (5), further comprising inorganic filler.
(7) The transmission sheet used for a non-contact power transmission system according to any one of (4) to (6), in which the first insulating layer is composed of a polymer material having a volume resistivity of 1×10¹⁰ Ω·cm or higher.
(8) The transmission sheet used for a non-contact power transmission system according to any one of (4) to (7), in which the first insulating layer is composed of any one of natural rubber, EPDM, ABS resin, and PTFE.
(9) A transmission unit used for a non-contact power transmission system which can transmit power by arranging a transmission electrode and a reception electrode to be close to each other, wherein the transmission unit comprises an electrode and a functional composite material layer in this order; wherein the functional composite material layer is obtained by dispersing conductive filler in a polymer material, wherein an amount of the conductive filler added in the functional composite material layer is 90 parts by mass or less with respect to 100 parts by mass of the polymer material, and wherein a conductivity of the functional composite material layer is 10 S/m or higher.
(10) The transmission unit used for a non-contact power transmission system according to (9), in which a first insulating layer is formed on the functional composite material layer.
(11) The transmission unit used for a non-contact power transmission system according to (9) or (10), in which the first insulating layer is composed of a polymer material having a volume resistivity of 1×10¹⁰ Ω·cm or higher.
(12) The transmission unit used for a non-contact power transmission system according to (10) or (11), in which the first insulating layer is composed of any one of natural rubber, EPDM, ABS resin, and PTFE.
(13) The transmission unit used for a non-contact power transmission system according to any one of (9) to (12), in which a second insulating layer is formed between the electrode and the functional composite material layer.
(14) The transmission unit used for a non-contact power transmission system according to (13), in which the second insulating layer is composed of a polymer material having a volume resistivity of 1×10¹⁰ Ω·cm or higher.
(15) The transmission unit used for a non-contact power transmission system according to (13) or (14), in which the second insulating layer is composed of any one of natural rubber, EPDM, ABS resin, PTFE, and a cyano acrylate-based adhesive such as ethyl cyanoacrylate.
(16) The transmission unit used for a non-contact power transmission system according to any one of (13) to (15), in which the electrode is composed of a conductor including an elastomer and a carbon fiber.
(17) A transmission unit used for a non-contact power transmission system which can transmit power by arranging a transmission electrode and a reception electrode to be close to each other, wherein the transmission unit comprises an electrode, a functional composite material layer and a first insulating layer in this order, wherein the functional composite material layer is composed of a composite material including a polymer material and conductive filler.
(18) The transmission unit used for a non-contact power transmission system according to (17), in which the first insulating layer is composed of any one of natural rubber, EPDM, ABS resin, and PTFE.
(19) The transmission unit used for a non-contact power transmission system according to (17) or (18), in which a second insulating layer is formed between the electrode and the functional composite material layer.
(20) The transmission unit used for a non-contact power transmission system according to (19), in which the second insulating layer is composed of any one of natural rubber, EPDM, ABS resin, PTFE, and a cyano acrylate-based adhesive such as ethyl cyanoacrylate.
(21) The transmission unit used for a non-contact power transmission system according to any one of (17) to (20), in which the electrode is composed of a conductor including an elastomer and a carbon fiber.
(22) A non-contact power transmission system comprising the transmission sheet used for a non-contact power transmission system according to any one of (1) to (8).
(23) A non-contact power transmission system comprising the transmission unit used for a non-contact power transmission system according to any one of (9) to (21).

It should be noted that "arranging a transmission electrode and a reception electrode to be close to each other" includes arranging a transmission electrode and a reception electrode to be close to each other with a transmission sheet interposed therebetween. In addition, within a range not impairing the effects of the present invention, other layers may be further formed between the transmission electrode and the reception electrode.

### Advantageous Effects of Invention

According to the present invention, it is possible to provide a transmission unit used for a non-contact power transmission system which is capable of realizing high transmission efficiency, a transmission sheet constituting the transmission unit, and a non-contact power transmission system including the same. In particular, regarding the transmission sheet, it is possible to provide a transmission sheet capable of realizing high output even in the presence of a casing (low dielectric insulating layer).

### BRIEF DESCRIPTION OF THE DRAWINGS

FIG. 1 is a diagram schematically illustrating a transmission unit according to a first embodiment of the present invention.
FIG. 2 is a diagram schematically illustrating a transmission unit according to a second embodiment of the present invention.
FIG. 3 is a cross-sectional view schematically illustrating a coupling capacitor including a SUS electrode, a functional composite material layer, a first insulating layer, and a copper electrode in this order.
FIG. 4 is a diagram illustrating the results of capacitance in an AC measurement of a configuration illustrated in FIG. 3, in which "Cu (measured value)" represents the measurement result when copper is used instead of a functional composite material layer.
FIG. 5(a) is a diagram illustrating the measurement results regarding a relationship between the thickness of a PTFE film; and AC frequency characteristics of dielectric properties (relative dielectric constant and dielectric loss tangent) of a functional composite material layer and the PTFE film. FIG. 5(b) is a diagram illustrating the results when a copper layer is used instead of the functional composite material layer in a configuration of FIG. 5(a).
FIG. 6 is a graph illustrating the measurement results at AC frequencies of 0.1 MHz, 3 MHz, and 5 MHz regarding a relationship between an AC voltage and dielectric properties (relative dielectric constant and dielectric loss tangent) of a functional composite material layer and a PTFE film.
FIG. 7 is a graph illustrating the measurement results at AC frequencies of 0.1 MHz, 3 MHz, and 5 MHz regarding a relationship between an AC voltage and dielectric properties (relative dielectric constant and dielectric loss tangent) of a functional composite material layer, which is different from the functional composite material layer of FIG. 6, and a PTFE film.
FIG. 8 is a diagram illustrating combinations of a transmission-side configuration and a reception-side configuration.
FIG. 9 is a diagram illustrating a circuit configuration of a wireless power supply system (non-contact power transmission system) which is prepared in Examples according to the present invention and Comparative Examples.
FIG. 10 is a diagram illustrating the results of evaluating, based on an LED turned-on state, a transmission system in which a combination of transmission units including functional composite material layers used in Examples 11-1 to 11-6 is CO (first pattern).

### MODE FOR CARRYNG OUT THE INVENTION

Hereinafter, configurations of a transmission sheet, a transmission unit, and a non-contact power transmission system (an electric field coupling type non-contact power transmission system will be described as an example) including the same to which the present invention is applied will be described using the appended drawings. In some cases, in the drawings used in the following description, characteristic portions are illustrated on an enlarged scale for convenience of easy understanding of characteristics, and the dimension ratios and the like of the respective components are not necessarily the same as the actual ones. In addition, in the following description, materials, dimensions, and the like are merely exemplary, do not limit the present invention, and can be appropriately modified within a range not departing from the scope of the present invention.

### «Transmission Sheet»

"Transmission sheet" described in the present invention refers to a member constituting a transmission unit which is used for a non-contact power transmission system in which a transmission electrode and a reception electrode are arranged to be close to each other to transmit power, and refers to a member constituting portions other than electrodes. "Sheet" of "transmission sheet" is merely used as an expression which describes a commonly-used shape and is not limited to a thinly spread shape.

The transmission sheet according to the present invention can be used in a transmission unit on both a transmission side and a reception side. In addition, the transmission sheet can be used in a transmission unit of an electric field coupling type non-contact power transmission system including both a type in which a series resonance circuit or a parallel resonance circuit using resonance is adopted and a type in which an active capacitor circuit not using resonance is adopted, or can be used in a transmission unit of the other non-contact power transmission systems. In addition, the non-contact power transmission system is not particularly limited, and the transmission sheet can be used in a transmission unit of non-contact power transmission systems in various fields including mobile devices such as mobile phones or transport devices such as automobiles.

In addition, the transmission sheet according to the present invention can be used in a shape suitable for a non-contact power transmission system to be used.

In addition, within a range not impairing the effects of the present invention, the transmission sheet according to the present invention can be used in a form including other layers.

Since the transmission sheet according to the present invention includes a composite material including a polymer material as a base material, the softness and the flexibility thereof are higher than those of a metal, a ceramic, or the like.

Therefore, in a configuration in which the transmission sheet is formed on a transmission electrode or a reception electrode, even if convex or concave portions or strains are present on a surface of the electrode, the transmission sheet is deformed to conform to the shape. Therefore, the adhesion between the transmission sheet and the electrode is high, and thus the contact resistance is decreased.

Further, in a configuration in which the transmission sheet is formed on an electrode, when the transmission sheet is brought into contact (close contact) with a counterpart, for example, with an electrode coated with an insulating layer during power transmission, the transmission sheet can be deformed to conform to the surface shape of the counter electrode. As a result, a decrease in electrostatic capacitance can be prevented.

For example, in an electric field coupling type non-contact power transmission system in which a table mat or the like is placed on an exposed hard metal electrode, and a mobile phone is placed thereon to be supplied with power, when a back surface of the mobile phone is curved, the metal electrode and the table mat (transmission electrode side) are not in wide surface contact but in point contact with the mobile phone (reception electrode side). In order to improve the capacitance, a wide contact (close contact) surface is important. Therefore, the above-described contact (close contact) state is not desirable. On the other hand, when the transmission sheet according to the present invention is used, a wide contact (close contact) area can be secured due to the deformation of the transmission sheet. As a result, a high electrostatic capacitance can be obtained. Further, the transmission sheet according to the present invention is inexpensive and superior in moldability.

### (Transmission Sheet (First Embodiment))

A transmission sheet according to a first embodiment of the present invention comprises a functional composite material layer, in which the functional composite material layer is obtained by dispersing conductive filler in a polymer material, the amount of the conductive filler added in the functional composite material layer is 90 parts by mass or less with respect to 100 parts by mass of the polymer material, and a conductivity of the functional composite material layer is 10 S/m or higher.

In addition, it is preferable that an electrode including the transmission sheet or a counter electrode include an insulating layer (dielectric layer).

Even when the transmission sheet according to the first embodiment includes a low dielectric insulating layer such as a casing thereon, the electrostatic capacitance is high, and high output can be obtained.

The thickness of the transmission sheet according to the first embodiment is preferably 0.1 mm to 10 mm. This is because, in this range, the following effects can be obtained. The strength as a self-supported film can be obtained, a superior adhesion can be obtained, the volume of a transmission device is not large, and the weight thereof is small.

The properties of the transmission sheet according to the first embodiment can be adjusted and controlled by controlling preparation conditions such as the type of the polymer material, whether or not the polymer material is cross-linked, the type of the conductive filler, the morphology and the concentration of the conductive filler, or whether or not the inorganic filler is present. In addition, the properties of the transmission sheet can be adjusted and controlled using a well-known method.

According to the requirements of a client, a transmission sheet having properties (for example, relative dielectric constant and dielectric loss tangent) suitable for configurations (for example, the transmission sheet is formed on an electrode directly or with an insulating layer interposed therebetween, or a protective layer is formed on the transmission sheet) of a transmission unit including the transmission sheet can be used.

The transmission sheet according to the first embodiment can be prepared using a functional composite material A described below.

### [Functional Composite Material A]

The functional composite material A is a composite material which is obtained by dispersing conductive filler in a polymer material, in which the amount of the conductive filler added is selected to be 90 parts by mass or less with respect to 100 parts by mass of the polymer material such that the conductivity is 10 S/m or higher.

The functional composite material A includes a polymer material and conductive filler. In a commonly-used material, according to the mechanism based on the percolation theory when the filling amount (concentration, the additive amount) of the conductive filler is increased, the conductivity is increased, and when the filling amount is greater than a percolation threshold, the conductivity is rapidly increased.

The functional composite material A is a material obtained by dispersing the conductive filler in the polymer material, but the conductive filler is typically present as aggregates where a predetermined amount of particles are aggregated. Therefore, the material obtained by dispersing the conductive filler in the polymer material mainly refers to a material obtained by dispersing conductive filler aggregates in the polymer material, but includes a material obtained by dispersing the single conductive filler in the polymer material with a well-known method. For example, a composite material obtained by dispersing a single carbon nanotube in the polymer material is also included.

### <Method of Preparing Functional Composite Material A>

A method of preparing the functional composite material A is not particularly limited, and the functional composite material A can be obtained by adding the conductive filler to a matrix formed of the polymer material.

### [Polymer Material]

The polymer material is not particularly limited, but polyimide, silicone resin, a fluoropolymer, polyurethane, acrylic resin, polycarbonate, polyethylene, polypropylene, polyester, epoxy resin, nylon, a styrene-acrylonitrile copolymer, polystyrene, a polylactic acid, various engineering plastics, natural rubber (NR), and synthetic rubber (SR) and the like are preferable, and natural rubber (NR) and synthetic rubber (SR) are more preferable. Examples of the synthetic rubber (SR) include isoprene rubber, butadiene rubber, styrene-butadiene rubber, ethylene-propylene rubber (EPDM), chloroprene rubber, acrylic rubber, chlorosulfonated polyethylene rubber, urethane rubber, silicone rubber, butyl rubber (IIR), nitrile-butadiene rubber (NBR), fluorine-containing rubber, and ethylene vinyl acetate rubber, and epichlorohydrin rubber (ECO). Among these, ethylene-propylene rubber, butyl rubber, and nitrile rubber are preferable. Moreover, a conductive polymer such as polypyrrole, polythiophene, or polyaniline and derivatives thereof can be used as the polymer material. These polymer materials may be used alone or in a combination of two or more types. When a rubber having a carbon-carbon double bond such as natural rubber, butyl rubber, and nitrile rubber or a curing resin such as epoxy resin is used as the polymer material, it is preferable that the polymer material be cross-linked from the viewpoints of mechanical properties of the obtained composite material and the like. The cross-linking method is not particularly limited, and a well-known method can be used.

### [Conductive Filler]

Examples of the conductive filler include metal particles (including powders) of gold, silver, copper, aluminum, and the like, fibrous materials, carbon materials, and conductive ceramics. Among these, carbon materials and metal materials are preferable. Examples of the carbon materials include conductive carbon blacks such as graphite, acetylene black, and ketjen black; fullerene; and carbon fibers such as carbon nanotube, carbon nanofiber, carbon nanohorn, graphene, and vapor-grown carbon fiber. Among these, carbon fibers are preferable. As the metal materials, all the conductive metal materials can be used.

### [Other Components]

The functional composite material A may further include various additives (for example, a pigment, a stabilizer, or a plasticizer), a cross-linking agent, a cross-linking auxiliary agent, a cross-linking promoter, and inorganic filler in addition to the polymer material and the conductive filler described above. When the inorganic filler is added, it is preferable that the content of the inorganic filler be 0 parts by mass to 200 parts by mass with respect to the 100 parts by mass of the polymer material from the viewpoints of mechanical properties and the weight of the obtained composite material. In addition, in order to improve workability, mechanical properties, weather resistance, and the like, well-known additives may be appropriately contained.

### (Inorganic Filler)

The inorganic filler is not particularly limited, and examples thereof include barium titanate, strontium titanate, calcium titanate, titanium oxide, and insulating carbon.

The particle size and the amount of the inorganic filler added vary depending on the types of the polymer material, the conductive filler, and the inorganic filler to be used and the amount of the conductive filler. For example, when natural rubber or nitrile rubber is used as the polymer material, 2 parts by mass to 4 parts by mass of a carbon fiber with respect to the polymer material is used as the conductive filler, and titanium oxide is used as the inorganic filler, the particle size of the inorganic filler is preferably 5 nm to 100 nm and more preferably 10 nm to 20 nm, and the amount of the inorganic filler added is preferably 0.5 parts by mass to 200 parts by mass and more preferably 1 part by mass to 100 parts by mass with respect to 100 parts by mass of the polymer material.

### (Cross-Linking)

Cross-linking conditions are not particularly limited and can be appropriately selected.

For example, when a polymer material having a carbon-carbon double bond such as natural rubber (NR), nitrile-butadiene rubber (NBR), or butyl rubber is used, the polymer material can be heated to be cross-linked using a cross-linking agent such as sulfur, a sulfur compound, an organic peroxide, an amine compound or a metal oxide, preferably, sulfur or an organic peroxide.

When sulfur is used as the cross-linking agent, the amount of the cross-linking agent added is preferably 1 part by mass to 4 parts by mass with respect to 100 parts by mass of the polymer material. In addition, optionally, a cross-linking auxiliary agent such as zinc oxide, magnesium oxide, stearic acid, or amines and a cross-linking promoter such as thiazoles or thiuram disulfides can be used.

The organic peroxide which can be used as the cross-linking agent is not particularly limited, and examples thereof include dialkyl peroxides such as dicumyl peroxide (DCP) or 2,5-dimethyl-2,5-di(t-butylperoxy)hexane; and peroxyketals such as 1,1-bis(t-butylperoxy)-3,3,5-trimethylcyclohexane or 1,1-bis(t-hexylperoxy)-3,3,5-trimethylcyclohexane. Among these, dicumyl peroxide and 1,1-bis(t-butylperoxy)-3,3,5-trimethylcyclohexane are preferable. When the organic peroxide is used, the amount of the organic peroxide added is preferably 0.5 parts by mass to 3 parts by mass with respect to 100 parts by mass of the polymer material.

### (Addition of Conductive Filler)

A method of adding the conductive filler to the matrix formed of the polymer material is not particularly limited, and a well-known method can be used.

For example, the polymer material, the conductive filler, and, if necessary, other components which are weighed in advance are kneaded using a combination of shearing and stretching. In addition, a batch type kneading method using a Banbury mixer, a kneader, a roll, or the like; and a continuous kneading method using a single screw extruder or a twin screw extruder, which are known as commonly-used methods of kneading a polymer composition, can be used.

In addition, a wet method can be used. That is, the polymer material is dissolved or dispersed in a solvent in advance such that the content thereof is 3 mass% to 20 mass%. When it is difficult to dissolve or disperse the polymer material, the polymer material may be converted into fine particles in advance using a method such as frost shattering. When a combination of two or more types of polymer materials which are mutually insoluble is used as the polymer material, all the polymer materials may be dissolved or dispersed in one liquid, or two types of polymer material solutions may be separately prepared and then mixed. When a cross-linked polymer material is used as the polymer material, the polymer material may be dissolved or dispersed in combination with the cross-linking agent and, if necessary, the cross-linking auxiliary agent and the cross-linking promoter.

Meanwhile, the conductive filler is dispersed in the same solvent as that in which the polymer material is dissolved or dispersed such that the content of the carbon fiber is 90 mass% or less with respect to 100 parts by mass of a dispersion medium.

Next, the solution in which the conductive filler is dispersed is added to the polymer material solution to disperse the filler. Then, the solvent is removed from the mixture.

When the inorganic filler is added to the functional composite material, the inorganic filler is dispersed in the same solvent as the conductive filler dispersion and is adjusted such that the content of the inorganic filler is 90 mass% or less. Then, the obtained dispersion is added to the polymer material solution.

A method of dispersing the filler in the solution is not particularly limited, and, for example, a method using a homogenizer can be used.

### (Other Processes)

The functional composite material can be appropriately molded to be used. A molding method is not particularly limited, and examples thereof include injection molding, blow molding, vacuum molding, extrusion molding (including multi-layer sheet molding), foam molding, compression molding, powder injection molding, reaction injection molding (RIM), casting, vacuum pressure molding, stamping, calender molding, and laminate molding. In this embodiment, compression molding is primarily used in many cases.

When the polymer material in the composite material is cross-linked, the cross-linking is performed after removing the solvent. Examples of a cross-linking method include light cross-linking and thermal cross-linking. Among these, thermal cross-linking is preferable. When thermal cross-linking is performed, the temperature and the time thereof are not particularly limited and can be appropriately selected according to the type of the polymer material to be used. For example, when a rubber having a carbon-carbon double bond such as natural rubber, butyl rubber, or nitrile rubber is cross-linked, the temperature and the time are preferably 110°C to 150°C and 15 minutes to 30 minutes, respectively. The thermal cross-linking and the molding process can be performed at the same time.

### [Function of Functional Composite Material]

In the functional composite material A, since the polymer material can be used as a matrix, various properties can be imparted. For example, when an elastomer such as rubber is used as the polymer material, the functional composite material A has flexibility. Therefore, in the functional composite material A, a variety of effects can be expected in uses requiring these properties: for example, when electromagnetic waves are transmitted and received, the functional composite material A can be used as a dielectric layer which is arranged between electrodes so as to efficiently transmit and receive electromagnetic waves. For example, as described in Japanese Unexamined Patent Application, First Publication No. 2010-16592, effects can be expected as an interface interposed between radio wave transmission media, or effects of contributing to the stabilization of an electromagnetic field and the output control can be expected during wireless power supply such as electromagnetic induction, electromagnetic resonance, or magnetic resonance.

### (Transmission Sheet (Second Embodiment))

A transmission sheet according to a second embodiment of the present invention includes a functional composite material layer according to the first embodiment and a first insulating layer in this order. The first insulating layer may be provided on both surfaces of the functional composite material layer. The functional composite material layer is obtained by dispersing conductive filler in a polymer material, in which the amount of the conductive filler added is 90 parts by mass or less with respect to 100 parts by mass of the polymer material, and the conductivity is 10 S/m or higher.

The thickness of the functional composite material layer is preferably 0.1 mm to 10 mm. This is because, in this range, the following effects can be obtained. The strength as a self-supported film can be obtained, a superior adhesion can be obtained, the volume of a transmission device is not large, and the weight thereof is small. In addition, the electrostatic capacitance does not deteriorate, and a sufficient transmission capability can be obtained.

A material of the first insulating layer is not particularly limited as long as it is a polymer material which has an insulating property (a volume resistivity of 1×10¹⁰ Ω·cm, or higher, preferably 1×10¹² Ω·cm or higher, and more preferably 1×10¹⁴ Ω·cm or higher; when the volume resistivity is lower than 1×10¹⁰ Ω·cm, dielectric loss is increased) and does not impair adhesion, and examples thereof include polyimide, silicone resin, a fluoropolymer, polyurethane, acrylic resin, polycarbonate, polyolefin resin such as polyethylene or polypropylene, polyester, epoxy resin, nylon, a styrene-acrylonitrile copolymer, polystyrene, vinyl acetate, polylactic acid, various engineering plastics, natural rubber (NR), or synthetic rubber (SR). Examples of the synthetic rubber (SR) include isoprene rubber, butadiene rubber, styrene-butadiene rubber, ethylene-propylene rubber (EPDM), chloroprene rubber, acrylic rubber, chlorosulfonated polyethylene rubber, urethane rubber, silicone rubber, butyl rubber (IIR), nitrile-butadiene rubber(NBR), fluorine-containing rubber, ethylene vinyl acetate rubber, and epichlorohydrin rubber (ECO). Preferably, natural rubber (NR), EPDM, polyethylene, polypropylene, ABS resin, nylon, PET, PTFE, polyimide, vinyl acetate, or polystyrene can be used.

As a method of forming the first insulating layer, a method of using a self-supported film of an insulating material or a method including: coating a solution in which a polymer material used to form an insulating layer is dissolved or dispersed in a solution on the functional composite material layer; and removing the solvent can also be considered. However, the method of forming the first insulating layer is not particularly limited, and a well-known method can be used. Examples of the coating method include methods using a bar coater, a spin coater, and screen printing.

Alternatively, a method of laminating a polymer material used to form an insulating layer as it is using a sheet molding machine or a multi-layer extruder without using a solvent may also be used.

The thickness of the first insulating layer is preferably 5 µm to 5 mm. This is because, in this range, the following effects can be obtained. The strength of the insulating layer is maintained, a decrease in electrostatic capacitance is suppressed, and a sufficient transmission capability is easily obtained.

In the transmission sheet according to the second embodiment, the properties thereof and the relative dielectric constant and the dielectric loss tangent at a desired transmission frequency can be adjusted and controlled by being combined with the first insulating layer and controlling preparation conditions such as the type of the polymer material, whether or not the polymer material is cross-linked, the type of the conductive filler, the morphology and the concentration of the conductive filler, or whether or not the inorganic filler is present.

When the transmission sheet is formed of, for example, a conductive elastomer and an insulating elastomer, the transmission sheet has elasticity and flexibility and thus can be curved.

### <<Transmission Unit>>

"Transmission unit" described in the present invention refers to a transmission unit used for a non-contact power transmission system in which a transmission electrode and a reception electrode are arranged to be close to each other to transmit power, and refers to a member including an electrode and a transmission sheet. The shape of "the transmission sheet" is not limited.

The transmission unit according to the present invention can be used as a transmission unit on both a transmission side and a reception side. In addition, the transmission unit can be used as a transmission unit of an electric field coupling type non-contact power transmission system including both a type in which a series resonance circuit or a parallel resonance circuit using resonance is adopted and a type in which an active capacitor circuit not using resonance is adopted, or can be used as a transmission sheet of the other non-contact power transmission systems. In addition, the non-contact power transmission system is not particularly limited, and the transmission unit can be used as a transmission unit of non-contact power transmission systems in various fields including mobile devices such as mobile phones or transport devices such as automobiles.

In addition, the shape of the transmission unit according to the present invention can be changed to fit with various shapes of the non-contact power transmission system to be used.

In addition, within a range not impairing the effects of the present invention, the transmission unit according to the present invention can be used in a form including other layers.

### (Transmission Unit (First Embodiment))

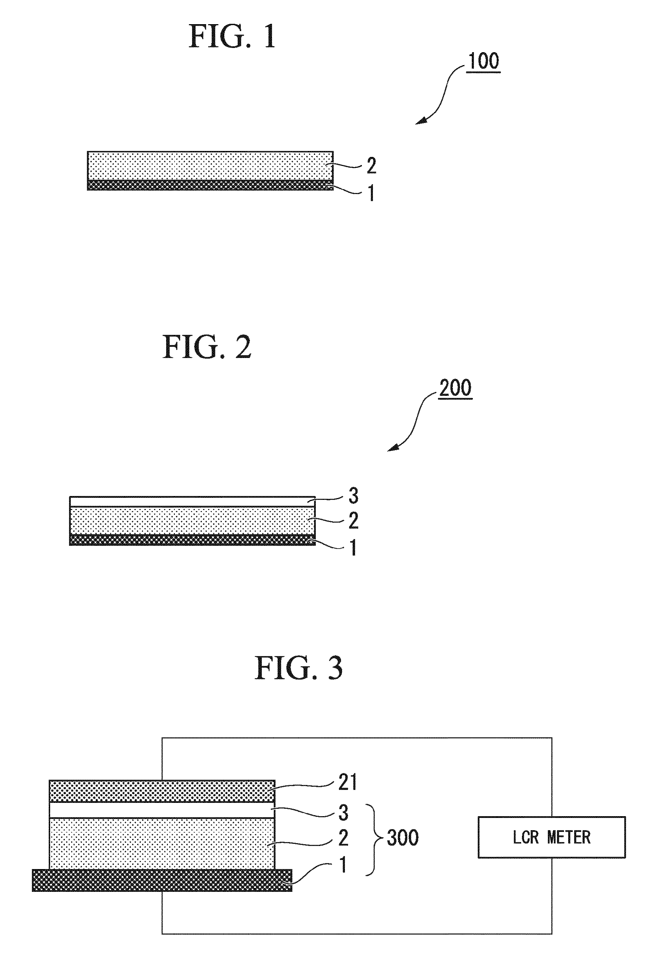

FIG. 1 is a diagram schematically illustrating a transmission unit according to the first embodiment.

A transmission unit 100 according to an embodiment of the present invention is a transmission unit used for a non-contact power transmission system in which a transmission electrode and a reception electrode are arranged to be close to each other to transmit power. The transmission unit includes an electrode 1 and a functional composite material layer 2 in this order.

The functional composite material layer 2 is obtained by dispersing conductive filler in a polymer material, in which the amount of the conductive filler added is 90 parts by mass or less with respect to 100 parts by mass of the polymer material, and the conductivity is 10 S/m or higher. Typically, the optimized amount of the conductive filler added varies depending on the type of the conductive filler.

Since the functional composite material layer 2 which is formed on the electrode 1 in the transmission unit 100 illustrated in FIG. 1 is formed of a composite material including a polymer material as a base material, the softness and the flexibility are higher than those of a metal, a ceramic, or the like. Thus, even if convex or concave portions or strains are present on a surface of the electrode 1, the functional composite material layer 2 is deformed to conform to the shape. Therefore, the adhesion between the functional composite material layer 2 and the electrode 1 is high, and thus the contact resistance is decreased.

Further, when the functional composite material layer 2 is brought into contact (close contact) with a counter electrode coated with, for example, an insulating layer during power transmission, the functional composite material layer 2 can be deformed to conform to the surface shape of the counter electrode. As a result, a decrease in electrostatic capacitance can be prevented.

For example, in an electric field coupling type non-contact power transmission system in which a table mat or the like is placed on an exposed hard metal electrode, and a mobile phone is placed thereon to be supplied with power, when a back surface of the mobile phone is curved, the metal electrode and the table mat (transmission electrode side) are not in wide surface contact but in point contact with the mobile phone (reception electrode side). In order to improve the capacitance, a wide contact (close contact) surface is important. Therefore, the above-described contact (close contact) state is not desirable. On the other hand, when the transmission unit according to the present invention is used, a wide contact (close contact) area can be secured due to the deformation of the functional composite material layer 2. As a result, a high electrostatic capacitance can be obtained.

The thickness of the functional composite material layer 2 is preferably 0.1 mm to 10 mm. This is because, in this range, the following effects can be obtained. The strength as a self-supported film can be obtained, a superior adhesion can be obtained, the volume of a transmission device is not large, and the weight thereof is small. In addition, the electrostatic capacitance does not deteriorate, and a sufficient transmission capability can be obtained.

The shape of the electrode 1 is not particularly limited.

As a material of the electrode 1, any materials can be used without particular limitation as long as they are conductive. Specifically, for example, metals such as copper, aluminum, or iron, transparent electrodes such as ITO, metal foils, and films obtained by vapor deposition of various metals can be used.

For example, as another material of the electrode, a conductive material including a polymer material as a base material and a conductivity imparting agent (conductive filler) can be used. Since such a material has flexibility, the material can be used for an electrode requiring flexibility. In addition, the functional composite material layer also has flexibility, and thus when the functional composite material layer is combined with the electrode formed of the material, the entire transmission unit can have flexibility.

### <First Insulating Layer>

The transmission unit according to the first embodiment may include the first insulating layer on the functional composite material layer 2.

In an actual non-contact power transmission system, in order to improve durability or the like during use, it is preferable that a protective film be formed on the functional composite material layer. The first insulating layer has a function as a protective film.

In addition, the first insulating layer itself has a function as a dielectric layer of a coupling capacitor.

It can be said that the first insulating layer is a modeling of a casing.

In order to solve a problem of decrease in capacity caused by the protective film, for example a method of directly coating an extremely thin film having a thickness of about 50 µm or less on a surface of a transmission electrode and bringing the extremely thin film into close contact with a reception electrode can be considered. However, since an electrode of the related art is hard, it is difficult to arrange curved surfaces to be in close contact with each other (it is difficult to position curved surfaces to be in close contact with each other). Therefore, the adhesion is extremely decreased, and thus the output is decreased. On the other hand, in the transmission unit according to the present invention, the flexible functional composite material layer is formed on the electrode, and the protective film (first insulating layer) can be formed on the functional composite material layer. Therefore, the decrease in adhesion can be avoided.

In a configuration in which the first insulating layer is provided, the first insulating layer can function as a dielectric layer of a coupling capacitor.

A material of the first insulating layer is not particularly limited as long as it is a polymer material which has an insulating property (a volume resistivity of 1×10¹⁰ Ω·cm, or higher, preferably 1×10¹² Ω·cm or higher, and more preferably 1×10¹⁴ Ω·cm or higher; when the volume resistivity is lower than 1×10¹⁰ Ω·cm, dielectric loss is increased) and does not impair adhesion, and examples thereof include polyimide, silicone resin, a fluoropolymer, polyurethane, acrylic resin, polycarbonate, polyolefin resin such as polyethylene or polypropylene, polyester, epoxy resin, nylon, a styrene-acrylonitrile copolymer, polystyrene, vinyl acetate, polylactic acid, various engineering plastics, natural rubber (NR), or synthetic rubber (SR). Examples of the synthetic rubber (SR) include isoprene rubber, butadiene rubber, styrene-butadiene rubber, ethylene-propylene rubber (EPDM), chloroprene rubber, acrylic rubber, chlorosulfonated polyethylene rubber, urethane rubber, silicone rubber, butyl rubber (IIR), nitrile-butadiene rubber(NBR), fluorine-containing rubber, ethylene vinyl acetate rubber, and epichlorohydrin rubber (ECO). Preferably, natural rubber (NR), EPDM, polyethylene, polypropylene, ABS resin, nylon, PET, PTFE, polyimide, vinyl acetate, or polystyrene can be used.

The thickness of the first insulating layer is preferably 5 µm to 5 mm. This is because, in this range, the following effects can be obtained. The strength of the insulating layer is maintained, a decrease in electrostatic capacitance is suppressed, and a sufficient transmission capability is easily obtained.

### <Second Insulating Layer>

The transmission unit according to the first embodiment may further include a second insulating layer between the electrode and the functional composite material layer 2.

This second insulating layer can function as a dielectric layer. In a configuration in which the first insulating layer and/or the second insulating layer is provided, the first insulating layer and/or the second insulating layer can function as a dielectric layer.

A material of the second insulating layer is not particularly limited as long as it is a polymer material which has an insulating property (a volume resistivity of 1×10¹⁰ Ω·cm or higher, preferably 1×10¹² Ω·cm or higher, and more preferably 1×10¹⁴ Ω·cm or higher; when the volume resistivity is lower than 1×10¹⁰ Ω·cm, dielectric loss is increased) and does not impair adhesion, and examples thereof include polyimide, silicone resin, a fluoropolymer, polyurethane, acrylic resin, polycarbonate, polyolefin resin such as polyethylene or polypropylene, polyester, epoxy resin, nylon, a styrene-acrylonitrile copolymer, polystyrene, vinyl acetate, polylactic acid, various engineering plastics, natural rubber (NR), or synthetic rubber (SR) . Examples of the synthetic rubber (SR) include isoprene rubber, butadiene rubber, styrene-butadiene rubber, ethylene-propylene rubber (EPDM), chloroprene rubber, acrylic rubber, chlorosulfonated polyethylene rubber, urethane rubber, silicone rubber, butyl rubber (IIR), nitrile-butadiene rubber(NBR), fluorine-containing rubber, ethylene vinyl acetate rubber, and epichlorohydrin rubber (ECO). Preferably, natural rubber (NR), EPDM, polyethylene, polypropylene, ABS resin, nylon, PET, PTFE, polyimide, vinyl acetate, or polystyrene can be used. In addition, a cyano acrylate-based adhesive such as an ethyl cyanoacrylate can also be used.

Examples of the adhesive include cyano acrylate-based adhesives such as ethyl cyanoacrylate, epoxy resin-based adhesives, silicone-based adhesives, styrene-butadiene rubber solution-based adhesives, and aqueous polymer-isocyanate-based adhesives. The second insulating layer can be provided by treating a surface of an electrode to form a surface layer such as an oxide coating film thereon.

The thickness of the second insulating layer is preferably 5 µm to 5 mm. This is because, in this range, the following effects can be obtained. The strength of the insulating layer is maintained, a decrease in electrostatic capacitance is suppressed, and a sufficient transmission capability is easily obtained.

### (Transmission Unit (Second Embodiment))

FIG. 2 is a diagram schematically illustrating a transmission unit according to the second embodiment.

A transmission unit 200 according to the second embodiment is a transmission unit used for a non-contact power transmission system in which a transmission electrode and a reception electrode are arranged to be close to each other to transmit power. The transmission unit includes an electrode 1, a functional composite material layer 2, and a first insulating layer 3 in this order.

The functional composite material layer 2 can be formed of the functional composite material A including the polymer material and the conductive filler.

Within a range not impairing the effects of the present invention, the composite material constituting the functional composite material layer may further include a cross-linking agent, a cross-linking auxiliary agent, a cross-linking promoter, and an inorganic dielectric in addition to the polymer material and the conductive filler described above.

As the electrode 1, the same electrode as that of the transmission unit according to the first embodiment can be used.

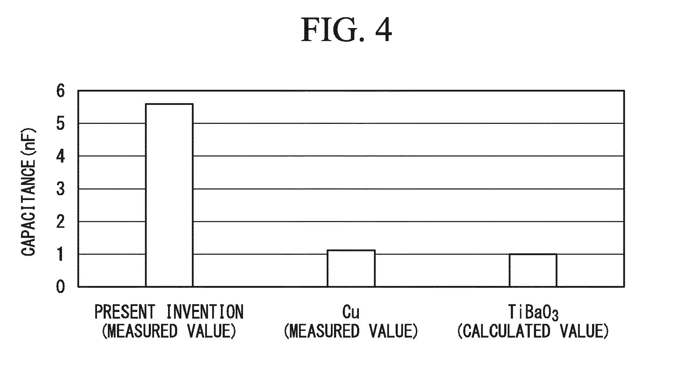

FIG. 4 is a diagram illustrating the results of capacitance in an AC measurement of a configuration illustrated in FIG. 3 in which the functional composite material layer 2, the PTFE film (first insulating layer) 3, and a copper electrode 21 are formed on the SUS electrode 1 in this order. The configuration in which the SUS electrode 1, the functional composite material layer 2, and the first insulating layer 3 are formed corresponds to a transmission unit 300 in a non-contact power transmission system such as an electric field coupling type non-contact power transmission system.

In the transmission unit 300, the functional composite material layer 2 corresponds to "the transmission sheet" according to the first embodiment, and the functional composite material layer 2 and the PTFE film (first insulating layer) 3 correspond to "the transmission sheet" according to the second embodiment.

The functional composite material layer having a thickness of about 2 mm was obtained by kneading the polymer material (natural rubber (NR): nitrile-butadiene rubber(NBR)=7:3), 10 phr (10 parts by mass with respect to 100 parts by mass of the polymer material) of VGCF-X (registered trademark, manufactured by Showa Denko K.K.) as the conductive filler, 4 phr (4 parts by mass with respect to 100 parts by mass of the polymer material) of TiO₂ as the inorganic filler, and 1 phr (1 part by mass with respect to 100 parts by mass of the polymer material) of dicumyl peroxide (DCP) as the cross-linking agent with each other, followed by rolling and compression molding.

From this functional composite material layer, a sheet having a size of 5 cmx5 cm was cut out. The conductivity of the sheet was 16.6 S/m when being measured by a four-probe method (manufactured by Mitsubishi Chemical Analytech Co., Ltd., "LORESTA GP" (trade name)) at a temperature of 25° and a humidity of 60% RH.

The first insulating layer was formed of PTFE (relative dielectric constant: 2.2), and the thickness thereof was 200 µm.

The thickness of the SUS electrode was 2 mm, and the thickness of the copper electrode was 1 mm.

The size of the SUS electrode was 13 cm×13 cm, and the sizes of the other layers and electrode were 10 cm×10 cm.

The measurement was performed using a LCR meter under conditions of application of 1 V and an AC frequency of 6.78 MHz.

For comparison, the same measurement was performed after changing the functional composite material layer to a copper layer. In addition, the results of a barium titanate (TiBaO₃) layer which are obtained by calculation are shown.

The capacitance of the functional composite material layer was 5.7 nF, whereas the capacitance of the copper layer was 1.1 nF. The capacitance of the barium titanate (TiBaO₃) layer was 1.0 nF.

It was found that, by laminating the PTFE film (200 µm) as a low dielectric insulating layer, the high relative dielectric constant of barium titanate is lost, and the utility as a material for an non-contact power transmission system, such as a high-efficiency electric field coupling type non-contact power transmission system, in which high capacitance is utilized is lost.

The relative dielectric constant of barium titanate was 4000. However, when the 200 µm-thick PTFE film (relative dielectric constant: 2.2) was coated on the barium titanate layer, the capacitance of a capacitor including the PTFE film and the barium titanate layer was decreased to 1/180. This result implies that the material having a dielectric constant of 4000 in terms of relative dielectric constant was initially used, but the dielectric constant was decreased to 2.

In addition, in the configuration in which the first insulating layer (PTFE film) was interposed between the metal electrodes, a high capacitance cannot be expected in the low dielectric insulating layer having a thickness of 200 µm or less. Further, when the low dielectric insulating layer having a thin thickness of 200 µm or less is used, there is a possibility that the capacitance may increase. However, the surface coating of the 200 µm-thick thin film is not practical from the viewpoints of the strength and the adhesion with a reception-side electrode.

On the other hand, when the functional composite material layer constituting the transmission unit according to the present invention is used, even if being used in combination with the PTFE film as the low dielectric insulating layer, the dielectric constant is not decreased as in the case of a metal layer or the barium titanate layer. In addition, since the functional composite material layer is formed of a highly flexible material, the adhesion with a counter electrode is high, thereby realizing high output.

The results of FIG. 4 shows that, when the transmission unit prepared using the transmission sheet according to the first embodiment is used, a high output can be realized in a non-contact power transmission system, such as an electric field coupling type non-contact power transmission system, including a casing on a surface thereof.

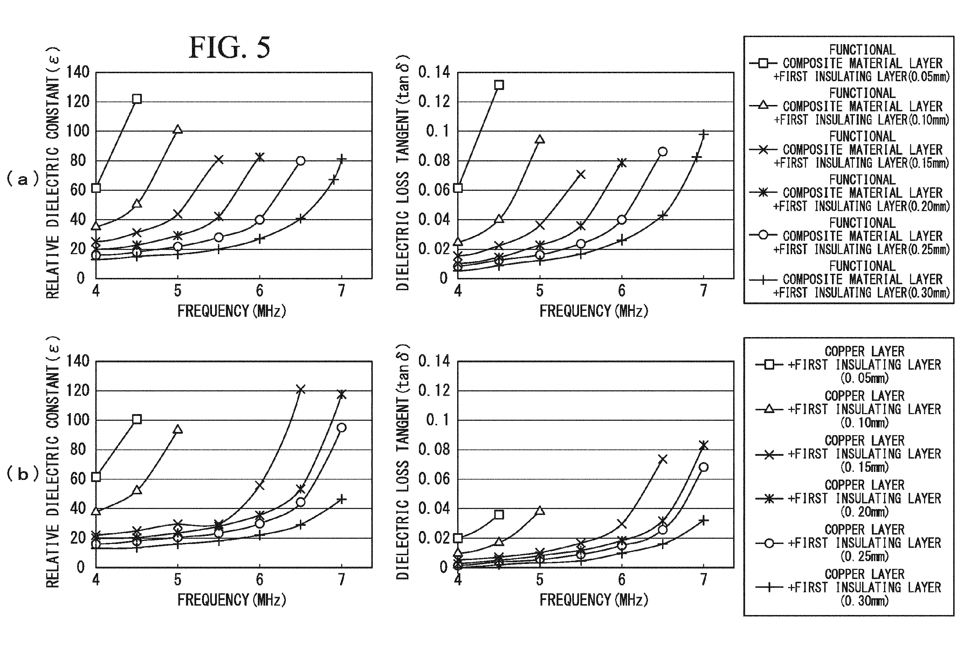

FIG. 5(a) is a diagram illustrating the measurement results regarding a relationship between the thickness of the PTFE film; and AC frequency characteristics of dielectric properties (relative dielectric constant and dielectric loss tangent) of the functional composite material layer and the PTFE film in a configuration (SUS electrode/functional composite material layer/PTFE film/copper electrode) including the same electrode configuration representing the capacitance as that of FIG. 4 except for the thickness of the first insulating layer (PTFE film). In the configuration of which the results are illustrated in FIG. 5(a), as in the case of FIG. 4, the functional composite material layer in the transmission unit corresponds to "the transmission sheet" according to the first embodiment. In addition, the functional composite material layer and the PTFE film (first insulating layer) correspond to "the transmission sheet" according to the second embodiment, and the conductivity of the functional composite material layer is 16.6 S/m.

The measurement was performed while changing the thickness of the PTFE film in a range from 0.05 mm to 0.3 mm by 0.05 mm.

FIG. 5(b) is a diagram illustrating the results of performing the same measurement as that of FIG. 5(a) on a configuration in which a copper layer is used instead of the functional composite material layer in the configuration shown in FIG. 5(a).

It was found from FIG. 5(a) that the frequency characteristics of the dielectric properties (relative dielectric constant and dielectric loss tangent) of the functional composite material layer and the first insulating layer (PTFE film) depend on the thickness of the first insulating layer (PTFE film).

By appropriately selecting the thickness of the first insulating layer (PTFE film) based on this result, a configuration satisfying desired dielectric properties (relative dielectric constant and dielectric loss tangent) at a used frequency can be obtained.

By using a configuration including the first insulating layer (PTFE film), the dielectric properties (relative dielectric constant and dielectric loss tangent) of the transmission unit can be controlled by controlling the thickness of the first insulating layer (PTFE film).

In addition, FIG. 5(a) illustrates that the resonant frequency peak is shifted depending on the thickness of the first insulating layer. Accordingly, by adjusting the thickness of the first insulating layer, the resonant frequency peak can be adjusted to a desired resonant frequency.

In addition, compared to FIG. 5(b), the dependence of the case where the functional composite material layer is used on the thickness of the first insulating layer is significantly higher (changes in dielectric properties and resonant frequency depending on change in the thickness are greater) than that of the case where the copper layer is used. Therefore, the transmission unit according to the present invention can be extremely easily controlled by controlling the thickness of the first insulating layer, and thus a transmission unit having desired properties can be prepared with high precision.

In this way, it is an unprecedented and entirely new finding that frequency characteristics can be easily controlled by controlling the thickness of the first insulating layer.

When the copper layer with extremely higher conductivity than those of the functional composite material is used, it is difficult to adjust a resonant frequency.

In a non-contact power transmission system such as an electric field coupling type non-contact power transmission system, a transmission material with high electrostatic capacitance and high workability in a high frequency region of higher than 5 MHz has yet to be developed. As illustrated in FIG. 5(a), in a coupling capacitor using the transmission sheet or the transmission unit according to the present invention, a high electrostatic capacitance is obtained in a high frequency region of higher than 5 MHz. In addition, since the transmission sheet or the transmission unit according to the present invention can be utilized with various types of commonly-used molding methods of a polymer, the workability thereof is high.

When a flexible composite material is used as in the case of the transmission unit or the transmission sheet according to the present invention, the adhesion is improved, and the contact area is increased, and thus power supply (transmission) efficiency is improved.

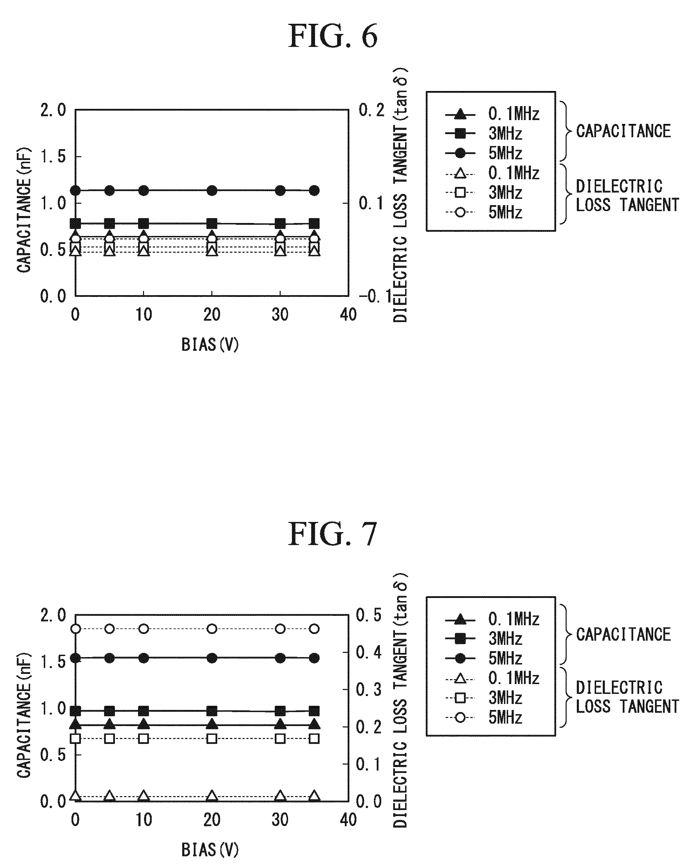

FIG. 6 is a graph illustrating the measurement results at AC frequencies of 0.1 MHz, 3 MHz, and 5 MHz regarding a relationship between a bias voltage and dielectric properties (relative dielectric constant and dielectric loss tangent) of the functional composite material layer and the PTFE film in the same configuration (SUS electrode/functional composite material layer/first insulating layer (PTFE film)/copper electrode) as that of FIG. 3.

In the configuration of which the results are illustrated in FIG. 6, as in the case of FIG. 4, the functional composite material layer in the transmission unit corresponds to "the transmission sheet" according to the first embodiment. In addition, the functional composite material layer and the PTFE film (first insulating layer) correspond to "the transmission sheet" according to the second embodiment, and the conductivity of the functional composite material layer is 16.6 S/m.

In many cases, dielectric properties (relative dielectric constant and dielectric loss tangent) of a ceramic dielectric greatly change depending on an applied voltage. Therefore, it is necessary that, after an applied voltage and a capacitance are determined first, a ceramic dielectric suitable for the applied voltage and the capacitance be searched. In addition, there are many cases where time and efforts are required for resonance matching.

On the other hand, the dielectric properties (relative dielectric constant and dielectric loss tangent) of the transmission unit according to the present invention (combination of the transmission sheet according to the present invention with the first insulating layer) do not substantially change depending on an applied bias voltage.

Accordingly, unlike a ceramic dielectric, it is not necessary that, after an applied voltage and a capacitance are determined first, a material suitable for the applied voltage and the capacitance be searched. In addition, resonance matching is easy to perform.

Even in the case where the copper layer is used instead of the functional composite material layer, it is presumed that the dielectric properties (relative dielectric constant and dielectric loss tangent) do not substantially change depending on an applied voltage. However, since the copper layer is hard, there is a problem with the adhesion with a counter electrode.

FIG. 7 illustrates the same results as the measurement results as those of FIG. 6 when the measurement was performed using a functional composite material layer having a thickness of about 2 mm which was obtained by kneading NR as the polymer material, 12 phr (12 parts by mass with respect to 100 parts by mass of the polymer material NR) of VGCF-X (registered trademark, manufactured by Showa Denko K.K.) as the conductive filler, and 2 phr of dicumyl peroxide (DCP) as the cross-linking agent with each other, followed by compression molding.

From this functional composite material layer, a sheet having a size of 5 cmx5 cm was cut out. The conductivity of the sheet was 27.5 S/m when being measured by a four-probe method (manufactured by Mitsubishi Chemical Analytech Co., Ltd., "LORESTA GP" (trade name)) at a temperature of 25° and a humidity of 60% RH.

It was found that, when this functional composite material layer is formed in the transmission unit shown in FIG. 6, the dielectric properties (relative dielectric constant and dielectric loss tangent) of this functional composite material layer also do not substantially change based on the applied bias voltage.

As shown in the configuration of FIG. 7, unlike a ceramic dielectric, it is not necessary to select a material, which is suitable for the applied voltage and the capacitance, after an applied voltage and a capacitance are determined. In addition, resonance matching is easy to perform.

### <Second Insulating Layer>

The transmission unit according to the second embodiment may include the second insulating layer between the electrode and the transmission sheet.

This second insulating layer can function as a dielectric layer. In a configuration in which the first insulating layer and/or the second insulating layer is provided, the first insulating layer and/or the second insulating layer can function as a dielectric layer.

The material of the second insulating layer is not particularly limited as long as it is a polymer material which has an insulating property (a volume resistivity of 1×10¹⁰ Ω·cm or higher, preferably 1×10¹² Ω·cm or higher, and more preferably 1×10¹⁴ Ω·cm or higher; when the volume resistivity is lower than 1×10¹⁰ Ω·cm, dielectric loss is increased) and does not impair adhesion, and examples thereof include polyimide, silicone resin, a fluoropolymer, polyurethane, acrylic resin, polycarbonate, polyolefin resin such as polyethylene or polypropylene, polyester, epoxy resin, nylon, a styrene-acrylonitrile copolymer, polystyrene, vinyl acetate, polylactic acid, various engineering plastics, natural rubber (NR), and synthetic rubber (SR). Examples of the synthetic rubber (SR) include isoprene rubber, butadiene rubber, styrene-butadiene rubber, ethylene-propylene rubber (EPDM), chloroprene rubber, acrylic rubber, chlorosulfonated polyethylene rubber, urethane rubber, silicone rubber, butyl rubber (IIR), nitrile-butadiene rubber(NBR), fluorine-containing rubber, ethylene vinyl acetate rubber, and epichlorohydrin rubber (ECO). Preferably, natural rubber (NR), EPDM, polyethylene, polypropylene, ABS resin, nylon, PET, PTFE, polyimide, vinyl acetate, or polystyrene can be used. In addition, a cyano acrylate-based adhesive such as an ethyl cyanoacrylate can also be used.

Examples of the adhesive include cyano acrylate-based adhesives such as ethyl cyanoacrylate, epoxy resin-based adhesives, silicone-based adhesives, styrene-butadiene rubber solution-based adhesives, and aqueous polymer-isocyanate-based adhesives. The second insulating layer can be provided by treating a surface of an electrode to form a surface layer such as an oxide coating film thereon.

The thickness of the second insulating layer is preferably 5 µm to 5 mm. When the thickness of the second insulating layer is less than 5 µm, the strength of the insulating layer is decreased. When the thickness of the second insulating layer is greater than 5 mm, the electrostatic capacitance is decreased, and a transmission capability is decreased.

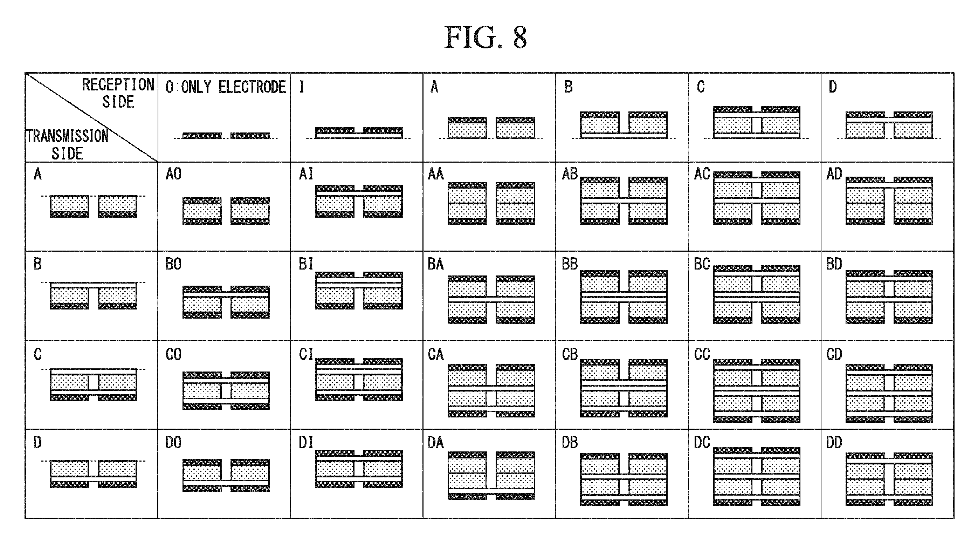

Examples of combinations of a transmission-side configuration and a reception-side configuration in a non-contact power transmission system using the transmission sheet or the transmission unit according to the present invention are as illustrated in FIG. 8. The transmission-side configuration includes four types including: electrode/functional composite material layer; electrode/functional composite material layer/first insulating layer; electrode/second insulating layer/functional composite material layer; and electrode/second insulating layer/functional composite material layer/first insulating layer. The reception-side configuration includes six types including: only electrode; electrode/second insulating layer; electrode/functional composite material layer; electrode/functional composite material layer/first insulating layer; electrode/second insulating layer/functional composite material layer; and electrode/second insulating layer/functional composite material layer/first insulating layer. That is, 24 types of combinations can be made. However, the combinations are not limited to these 24 types of combinations.

The properties (relative dielectric constant and dielectric loss tangent) of the transmission sheet and the transmission unit according to the present invention can be adjusted and controlled by controlling the amount of the conductive filler added and the aggregates of the conductive filler and using the methods described in this specification and/or well-known methods.

### [Examples]

Hereinafter, the present invention will be described in more details using Examples. However, the present invention is not limited to the following examples.

In Examples and Comparative Examples, the following materials were used.

Natural rubber (NR; manufactured by Kato Sansho. Co., Ltd., trade name: SMR-CV-60)
Butyl rubber (manufactured by JSR Corporation, trade name: BUTYL 268)
Nitrile rubber (NBR; manufactured by Zeon Corporation, trade name: ND4050)
Vapor-grown carbon fiber (manufactured by Showa Denko K.K., trade name: VGCF (registered trademark)-X, average fiber diameter: 10 nm to 15 nm, average fiber length: 3 µm)
Dicumyl peroxide (special grade chemical)
Titanium Oxide (manufactured by Showa Titanium K.K., trade name: SUPER-TITANIA (registered trademark) F-6, equivalent particle size: 15 nm)
Toluene (special grade chemical)
Butyl acetate (special grade chemical)

### (Example 1)

An AC voltage was applied to a configuration in which a layer (functional composite material layer) formed of the composite material forming the transmission sheet according to the present invention and a copper electrode were formed on a SUS electrode in this order to measure dielectric properties (relative dielectric constant and dielectric loss tangent). The measurement results are shown in Tables 1 and 2. In the tables, the thickness represents the thickness (mm) of the functional composite material layer.

As the functional composite material layer constituting the transmission sheet according to the present invention, a layer having a thickness of about 0.9 mm was obtained by kneading the polymer material (natural rubber (NR): nitrile-butadiene rubber(NBR)=7:3), VGCF-X (registered trademark, manufactured by Showa Denko K.K.) as the conductive filler, 4 phr of TiO₂ as the inorganic filler, and 1 phr of dicumyl peroxide (DCP) as the cross-linking agent with each other, followed by rolling and compression molding. During the preparation of the functional composite material layer, the amounts of VGCF-X added were 8 phr and 10 phr. As reference examples, cases where the amounts of VGCF-X added were 1 phr, 2 phr, 4 phr, and 6 phr during the preparation of the functional composite material layer were also shown in Tables 1 and 2.

The thickness of the SUS electrode was 2 mm, and the thickness of the copper electrode was 1 mm.

The size of the SUS electrode was 13 cm×13 cm, and the sizes of the other layers and electrode were 10 cm×10 cm. The size of the functional composite material layer was 10 cm×10 cm.

The measurement was performed using an LCR meter under conditions of an applied voltage of 1 V and AC frequencies of 100 Hz, 1 kHz, 10 kHz, 600 kHz, and 1 MHz.

**[Table 1]**

| Relative Dielectric Constant | | | | | | |
|---|---|---|---|---|---|---|
| | Hz | | | | | |
| | 100 | 1000 | 10000 | 600000 | 1000000 | Thickness mm |
| 1 phr (Reference Example) | 6.78 | 6.32 | 5.95 | 4.98 | 4.81 | 0.91 |
| 2 phr (Reference Example) | 108 | 42 | 19.6 | 8.47 | 7.98 | 0.899 |
| 4 phr (Reference Example) | 3830 | 3040 | 814 | 47.6 | 39.4 | 0.922 |
| 6 phr (Reference Example) | 2840 | 2780 | 2690 | 358 | 348 | 0.864 |
| 8 phr | 3760 | 3700 | 3590 | 1410 | 806 | 0.912 |
| 10 phr | 4590 | 4500 | 3780 | 2060 | 1100 | 0.929 |

**[Table 2]**

| Dielectric Loss Tangent | | | | | | |
|---|---|---|---|---|---|---|
| | Hz | | | | | |
| | 100 | 1000 | 10000 | 600000 | 1000000 | Thickness mm |
| 1 phr (Reference Example) | 5.73×10⁻² | 4.53×10⁻² | 4.54×10⁻² | 9.39×10⁻² | 9.75×10⁻² | 0.91 |
| 2 phr (Reference Example) | 9.46×10⁻¹ | 7.64×10⁻¹ | 5.42×10⁻¹ | 2.71×10⁻¹ | 2.60×10⁻¹ | 0.899 |
| 4 phr (Reference Example) | 4.01×10⁻¹ | 3.67×10⁻¹ | 1.25 | 1.46 | 1.33 | 0.922 |
| 6 phr (Reference Example) | 2.9 | 3.16×10⁻¹ | 9.40×10⁻² | 2.07 | 2.39 | 0.864 |
| 8 phr | 1.03×10 | 1.06 | 1.50×10⁻¹ | 1.11 | 1.80 | 0.912 |
| 10 phr | 1.95×10 | 2.02 | 3.11×10⁻¹ | 6.78×10⁻¹ | 1.16 | 0.929 |

It was found from Tables 1 and 2 that the relative dielectric constant and the dielectric loss tangent were changed along with changes in the dispersed state of the conductive filler. Regularity between the concentration of the conductive filler and the frequency properties was recognized. The relative dielectric constant was highly dependent on the concentration and had a tendency to decrease depending on the frequency. The dielectric loss tangent was increased as the frequency is increased.

A sheet having a size of 5 cmx5 cm was cut out. The conductivities of the cases where the amounts of VGCF-X added were 8 phr and 10 phr were 10.2 S/m and 16.6 S/m, respectively, when being measured by a four-probe method (manufactured by Mitsubishi Chemical Analytech Co., Ltd., "LORESTA GP" (trade name)) at a temperature of 25° and a humidity of 60% RH.

### (Example 2)

The functional composite material layer constituting the transmission sheet according to the present invention was prepared with the following method. The polymer material (natural rubber (NR) : nitrile-butadiene rubber (NBR)=7:3) and VGCF-X (registered trademark, manufactured by Showa Denko K.K.) as the conductive filler were kneaded with a Banbury mixer, and then a sheet was prepared using 6-inch rolls. The amounts of VGCF-X added were 8 phr, 10 phr, 12 phr, and 15 phr. 2 phr of Dicumyl peroxide (DCP) as the cross-linking agent was kneaded with the sheet, followed by compression molding under conditions of 150°C and 20 minutes. As a result, a molded body having a size of 12 cm×24 cm×2 mm (thickness) was obtained.

A sheet having a size of 5 cm×5 cm was cut out, and the conductivity thereof was measured. The measurement was performed by a four-probe method (manufactured by Mitsubishi Chemical Analytech Co., Ltd., "LORESTA GP" (trade name)) at a temperature of 25° and a humidity of 60% RH.

The conductivities of the cases where the amounts of VGCF-X added were 8 phr, 10 phr, 12 phr, 15 phr were 12.3 S/m, 17.2 S/m, 27.5 S/m, and 39.5 S/m, respectively.

In the transmission unit or the transmission sheet according to the present invention, using the properties of the composite material according to the present invention, the amount of the conductive filler added suitable for a non-contact power transmission system can be selected to efficiently transmit power.

### (Example 3)

Using the functional composite material layer of Tables 1 and 2 in which the amount of VGCF-X (conductive filler) added was 10 phr, the output peak voltage of a combination BO of transmission units illustrated in FIG. 8; and the frequency at this time were measured.

Using a 15 µm-thick polyimide film layer (first insulating layer) on the functional composite material layer of a transmission-side configuration, the functional composite material layers were dividedly provided on the respective two capacitors.

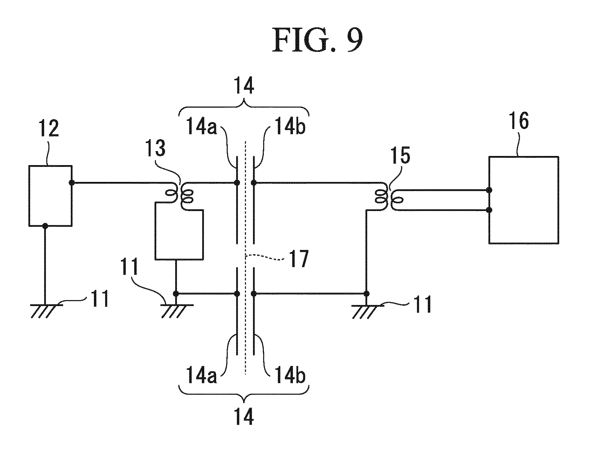

Specifically, as illustrated in FIG. 9, a transmission coil 13 that is connected to a transmitter 12; two pairs of metal electrodes 14 each pair of which include a transmission-side electrode 14a and a reception-side electrode 14b; and a reception coil 15 that is connected to a digital oscilloscope 16 are connected to each other to form an electric field coupling. In this case, as a dielectric 17 with which transmission and reception sheets are coupled, the transmission sheet was interposed between the metal electrodes. The transmitter 12, the transmission coil 13, the transmission-side electrode 14a, the reception-side electrode 14b, and the reception coil 15 were connected to grounds 11, respectively. When the transmitter 12 transmits power with 40 V, the secondary-side voltage of the reception coil 15 was measured with the digital oscilloscope 16 (load resistance: 200 Ω).

At this time, the peak voltage and the peak frequency were 15.4 V and 1070 kHz, respectively.

When being measured as a reference of highest output, the peak voltage and the peak frequency of a configuration in which a copper sheet (thickness: 2mm) was inserted instead of the functional composite material layer and the polyimide film layer were 15.5 V and 980 Hz.

When the functional composite material layer in which the VGCF-X concentration was 10 phr was used as a configuration of BO, the output was equivalent to that of the case in which the copper sheet was used. Since the polyimide layer is provided in the configuration of BO, there were no concerns of electric shock and electric leakage unlike the case where the copper sheet was inserted. Further, the functional composite material is soft, and thus the adhesion with a reception side is improved when a product is obtained therefrom. As a result, the configuration of BO has a characteristic in that a high output can be stably obtained.

### (Comparative Example 1)

Next, for comparison, the peak voltage and the peak frequency were measured in a configuration in which a copper sheet (thickness: 2 mm) was used instead of the functional composite material layer in the system of BO. The peak voltage and the peak frequency were 12.07 V and 997 Hz, respectively. It was found that a high output can be obtained when the VGCF-X concentration is 10 phr.

### (Comparative Example 2, Comparative Example 3, Example 4)

Next, regarding a configuration ("CO") in which the first insulating layer and the second insulating layer were provided on a single electrode, the peak voltage, the peak frequency, and the capacitance of a configuration in which a PTFE layer was provided instead of the functional composite material were compared to those of a configuration in which a copper sheet was provided instead of the functional composite material.

Specifically, a coupling capacitor configuration (Comparative Example 2) of SUS electrode/PTFE 0.1 mm/PTFE 1.0 mm/PTFE 0.1 mm/copper electrode; a coupling capacitor configuration (Comparative Example 3) of SUS electrode/PTFE 0.1 mm/copper sheet 1.0 mm/PTFE 0.1 mm/copper electrode; and a coupling capacitor configuration (Example 4) of SUS electrode/PTFE 0.1 mm/functional composite material (10 phr) sheet 1.0 mm/PTFE 0.1 mm/copper electrode were used.

The peak voltage, the peak frequency, and the electrostatic capacitance of Comparative Example 2 were 1.31 V, 997 kHz, and 62 pF, respectively. The peak voltage, the peak frequency, and the electrostatic capacitance of Comparative Example 3 were 6.4 V, 1070 kHz, and 210 pF, respectively. The peak voltage, the peak frequency, and the electrostatic capacitance of Example 4 were 8.5 V, 1070 kHz, and 320 pF, respectively.

As described above, in the configuration of Example 4, a higher output than those of Comparative Examples 2 and 3 was obtained, and the capacitance was also high.

### (Examples 5-1 to 5-8)

Table 3 shows output results of transmission systems when a combination of transmission units according to the present invention is BO, CO, BB, CB, or CC in FIG. 8.

**[Table 3]**

| No. | Composite Material | Conductive Filler | Thickness mm | Conductivity S/m | Output (W) | | | | |
|---|---|---|---|---|---|---|---|---|---|
| | | | | | BO | CO | BB | CB | CC |
| Example 5-1 | EPDM4640 | VGCF-X 12 phr | 2 | 26 | 3.8 | 3.7 | 3.8 | 3.8 | 3.7 |
| Example 5-2 | Q300F | VGCF-X 12 phr | 1 | 34 | 3.6 | 3.6 | 3.6 | 3.5 | 3.4 |
| Example 5-3 | Q300F | VGCF-X 12 phr | 2 | 34 | 3.5 | 3.4 | 3.4 | 3.2 | 3.2 |
| Example 5-4 | Q300F | VGCF-X 12 phr | 3 | 34 | 3.5 | 3.3 | 3.4 | 3.2 | 3.0 |
| Example 5-5 | High Density Polyethylene | KETJEN BLACK EC 10 wt% | 2 | 10 | 3.5 | 3.6 | 3.4 | 3.4 | 3.3 |
| Example 5-6 | Silicone Rubber EC200A | - | 2 | 35000 | 3.8 | 3.7 | 3.8 | 3.7 | 3.7 |
| Example 5-7 | Silicone Rubber EC200BL | - | 2 | 130 | 3.8 | 3.8 | 3.7 | 3.7 | 3.7 |
| Example 5-8 | Silicone Rubber EC200BM | - | 2 | 40 | 3.7 | 3.8 | 3.7 | 3.7 | 3.6 |
| Comparative Example 4-1 | PP-PC480A | - | 2 | -* | 0.5 | 0.5 | 0.1 | 0.1 | 0.1 |
| Comparative Example 4-2 | PP-Q300F | - | 2 | -* | 0.5 | 0.5 | 0.1 | 0.1 | 0.1 |
| Comparative Example 4-3 | EPDM4725 | VGCF-X 2 phr | 2 | -* | 1.3 | 1.1 | 0.4 | 0.3 | 0.3 |
| Comparative Example 4-4 | HDPE | BALKAN XC72 10 wt% | 2 | 2x10⁻⁵ | 1.2 | 1.0 | 0.5 | 0.3 | 0.4 |

| | | | | | | | | | |
|---|---|---|---|---|---|---|---|---|---|
| * : Out of Measurement Range | | | | | | | | | |

In Table 3, the conductivity was measured by a four-probe method (manufactured by Mitsubishi Chemical Analytech Co., Ltd., "LORESTA GP" (trade name)) at a temperature of 25° and a humidity of 60% RH.

The output was measured using a circuit schematically illustrated in FIG. 9. The load resistance during the output measurement was 50 Ω. When the transmitter 12 transmitted power with 6.78 MHz and 40 V, the secondary-side voltage of the reception-side coil 15 was measured with the digital oscilloscope 16.

As an electrode, a copper plate with a nickel-plated surface having a thickness of 1 mm was used.

The area of the electrode and the transmission sheet was 50 mmx50 mm. In the measurement, the transmission sheet was placed on a transmission electrode, a power receiving electrode having a load of 1 kg was placed thereon, and the measurement was performed under the condition of a load of 1 kg.

As the first insulating layer and the second insulating layer used in the transmission unit, a 0.14 mm-thick sheet of HI-PS (manufactured by PS Japan Corporation, "PSJ POLYSTYRENE (trade name) H0103" (MFR: 2.6 g/10 min)) was used.

The functional composite material layer of Example 5-1 was prepared as follows. Materials including synthetic rubber (SR) (EPDM (ethylene-propylene-diene rubber); manufactured by DuPont Dow Elastomer, "NORDEL IP 4725P" (trade name)) and the conductive filler (manufactured by Showa Denko K.K., "VGCF (registered trademark)-X) were kneaded using Plasticorder (manufactured by Brabender Gmbh) at 180°C. 2 phr of dicumyl peroxide as the cross-linking agent was added to the kneaded material and was kneaded with two 6-inch rolls at 100°C, followed by rolling and compression molding (150°C, 20 minutes) into a sheet shape having a thickness of 2 mm.

The functional composite material layers of Examples 5-2 to 5-4 were prepared as follows. Materials including a thermoplastic resin (manufactured by SunAllomer Ltd., "CATALLOY Q300F" (trade name)) and the conductive filler ("VGCF (registered trademark)-X") were kneaded using Plasticorder (manufactured by Brabender Gmbh) at 230°C. The kneaded materials were compress-molded at 230°C. As a result, sheets having a thickness of 1 mm, 2 mm, and 3 mm were prepared.

The functional composite material layer of Example 5-5 was prepared as follows. A high density polyethylene (manufactured by Japan Polyethylene Corporation, "NOVATEC HD" (trade name) HY331 (MFR: 1.0 g/10 min, density: 0.0951 g/cm)) and conductive filler (manufactured by Lion Corporation, "KETJEN BLACK" (registered trademark) EC) were kneaded using a unidirectional twin-screw extruder having a screw diameter of 38 mm (manufactured by Toshiba Machine Co., Ltd, discharged resin temperature: 235°C, and discharge amount: 10 kg/hr), followed by pelletizing (into a pellet shape). The kneaded materials were compress-molded at 200°C. As a result, a sheet having a thickness of 2 mm was prepared.

As the functional composite material layer of Examples 5-6 to 5-8, EC series conductive rubber (manufactured by Shin-Etsu Chemical Co., Ltd.) which is a commercially available conductive rubber was used.

### (Comparative Examples 4-1 to 4-4)

As the functional composite material layer of Comparative Example 4-1, instead of the functional composite material layer of Example 5-1, polypropylene "PC480A" (trade name, manufactured by SunAllomer Ltd.) as the thermoplastic resin was compression-molded at 230°C into a sheet shape having a thickness of 2 mm.

In addition, in Comparative Example 4-2, instead of the functional composite material layer of Example 5-2, "CATALLOY Q300F" (trade name, manufactured by SunAllomer Ltd.) as the thermoplastic resin was compression-molded at 230°C into a sheet shape having a thickness of 2 mm.

In addition, as the functional composite material layer of Comparative Example 4-3, synthetic rubber (SR) (EPDM (ethylene-propylene-diene rubber); manufactured by DuPont Dow Elastomer, "NORDEL IP 4725P" (trade name)) and 2 phr of the conductive filler (manufactured by Showa Denko K.K., "VGCF (registered trademark)-X) were kneaded with the same method as that of Example 5-1 and was molded into a sheet shape having a thickness of 2 mm.

In addition, the functional composite material layer of Comparative Example 4-4 was prepared with the same method as that of Example 5-5, except that the conductive filler was changed to "BALKAN XC72" (trade name, manufactured by Cabot Corporation).

In Comparative Examples 4-1 to 4-3, the LORESTA measurement values were out of the measurement range.

As shown in Table 3, in all the systems of Examples 5-1 to 5-8 in which the combination of transmission units used in the functional composite material layer having a conductivity of 10 S/m or higher was BO, CO, BB, CB, or CC in FIG. 8, high outputs were obtained. On the other hand, in Comparative Examples 4-1 to 4-4 in which the material layer having a conductivity of less than 10 S/m was used, only outputs which were about 1/3 to 1/40 of those of Examples 5-1 to 5-8 were obtained.

### (Examples 6-1 to 6-8)

Table 4 shows the results of evaluating, based on an LED turned-on state, a transmission system in which a combination of transmission units including the transmission sheets used in Examples 5-1 to 5-8 was CO of FIG. 8.

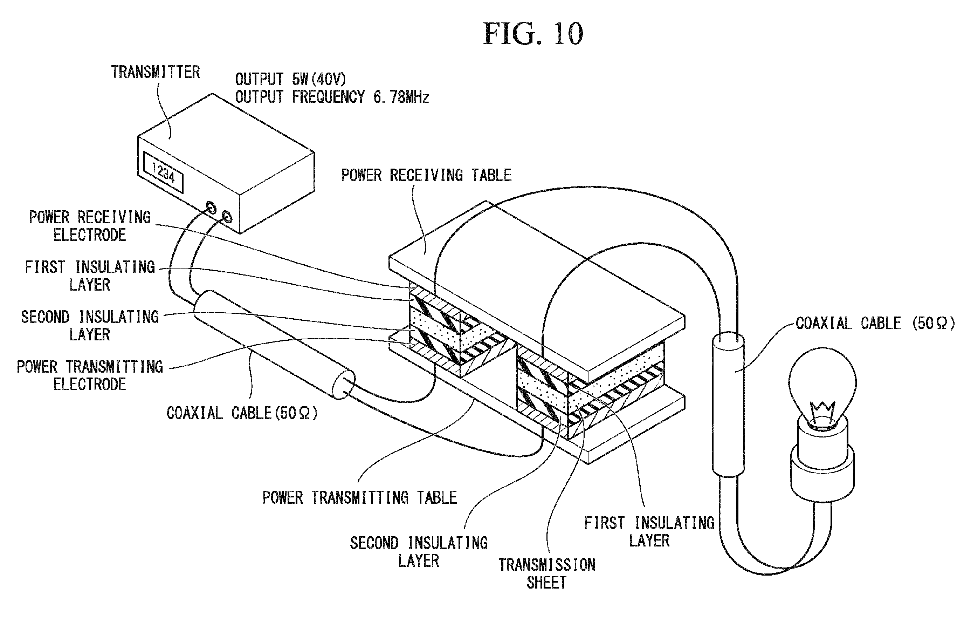

More specifically, the transmission system in which the combination of the transmission units was CO in FIG. 8 was evaluated based on a LED turned-on state by using a circuit schematically illustrated in FIG. 10 and arranging ten 3.5 V LEDs.

As an electrode, a copper plate with a nickel-plated surface having a thickness of 1 mm and a size of 60 mm×60 mm was used.

In addition, the area of the transmission sheet was 50 mmx50 mm, a 0.14 mm-thick sheet of HI-PS (manufactured by PS Japan Corporation, "PSJ POLYSTYRENE (trade name) H0103" (MFR: 2.6 g/10 min)) was used as the first insulating layer and the second insulating layer, and the evaluation was performed under the same condition as that of Example 5 of a load of 1 kg.

In the evaluation test, the transmitter transmitted power with 6.78 MHz and 5 W (40 V) to light up LEDs through the transmission system.

**[Table 4]**

| No. | Composite Material | Conductive Filler | Thickness mm | LED lighting Evaluation |
|---|---|---|---|---|
| Example 6-1 | EPDM4640 | VGCF-X 12 phr | 2 | A |
| Example 6-2 | Q300F | VGCF-X 12 phr | 1 | A |
| Example 6-3 | Q300F | VGCF-X 12 phr | 2 | A |
| Example 6-4 | Q300F | VGCF-X 12 phr | 3 | A |
| Example 6-5 | High Density Polyethylene | KETJEN BLACK EC 10 wt% | 2 | A |
| Example 6-6 | Silicone Rubber EC200A | - | 2 | A |
| Example 6-7 | Silicone Rubber EC200BL | - | 2 | A |
| Example 6-8 | Silicone Rubber EC200BM | - | 2 | A |
| Comparative Example 5-1 | PP-PC480A | - | 2 | D |
| Comparative Example 5-2 | PP-Q300F | - | 2 | D |
| Comparative Example 5-3 | EPDM4725 | VGCF-X 2 phr | 2 | D |
| Comparative Example 5-4 | HDPE | BALKAN XC72 10 wt% | 2 | D |

The LED turn-on evaluation results shown in Table 4 were determined based on the following criteria.
A: 10 LEDs were brightly turned on
B: 10 LEDs were turned on but darker than A
C: LEDs were unstably turned on
D: LEDs were not turned on

### (Comparative Examples 5-1 to 5-4)

In Table 4, Comparative Examples 5-1 to 5-4 show the LED lighting evaluation results of Comparative Examples 5-1 to 5-4 based on the same criteria as those of Examples 6-1 to 6-8.

As illustrated in Table 4, in Examples 6-1 to 6-8 in which each of the functional composite materials having a conductivity of 10 S/m or higher was used, high power was able to be stably received to the extent that 10 LEDs were brightly turned on. In Comparative Examples 5-1 to 5-4 in which each of the functional composite materials having a conductivity of lower than 10 S/m was used, although the same power as that of Examples 6-1 to 6-8 was transmitted thereto, only a small amount of power was received to the extent that 10 LEDs were not able to be turned on.

### DESCRIPTION OF NUMERALS

- 1:: ELECTRODE
- 2:: FUNCTIONAL COMPOSITE MATERIAL LAYER
- 3:: FIRST INSULATING LAYER
- 11:: GROUND
- 12:: TRANSMITTER
- 13:: TRANSMISSION-SIDE COIL
- 14:: ELECTRODE
- 14A:: TRANSMISSION-SIDE ELECTRODE
- 14B:: RECEPTION-SIDE ELECTRODE
- 15:: RECEPTION SIDE COIL
- 16:: DIGITAL OSCILLOSCOPE
- 17:: DIELECTRIC
- 21:: ELECTRODE
- 100:: TRANSMISSION UNIT
- 200:: TRANSMISSION UNIT
- 300:: TRANSMISSION UNIT

## Claims

1. A transmission sheet constituting a transmission unit used for a non-contact power transmission system which can transmit power by arranging a transmission electrode and a reception electrode to be close to each other:
wherein the transmission sheet consists of a functional composite material layer;
wherein the functional composite material layer is obtained by dispersing conductive filler in a polymer material;
wherein an amount of the conductive filler added in the functional composite material layer is 90 parts by mass or less with respect to 100 parts by mass of the polymer material; and
wherein a conductivity of the functional composite material layer is 10 S/m or higher.

2. The transmission sheet used for a non-contact power transmission system according to claim 1, wherein the conductive filler is composed of a carbon material.

3. The transmission sheet used for a non-contact power transmission system according to claim 1 or 2, further comprising inorganic filler.

4. A transmission sheet constituting a transmission unit used for a non-contact power transmission system which can transmit power by arranging a transmission electrode and a reception electrode to be close to each other:
wherein the transmission sheet comprises a functional composite material layer and a first insulating layer in this order;
wherein the functional composite material layer is obtained by dispersing conductive filler in a polymer material;
wherein an amount of the conductive filler added in the functional composite material layer is 90 parts by mass or less with respect to 100 parts by mass of the polymer material; and
wherein a conductivity of the functional composite material layer is 10 S/m or higher.

5. The transmission sheet used for a non-contact power transmission system according to claim 4, wherein the conductive filler is composed of a carbon material.

6. The transmission sheet used for a non-contact power transmission system according to claim 4 or 5, further comprising inorganic filler.

7. The transmission sheet used for a non-contact power transmission system according to any one of claims 4 to 6, wherein the first insulating layer is composed of a polymer material having a volume resistivity of 1×10¹⁰ Ω·cm or higher.

8. The transmission sheet used for a non-contact power transmission system according to any one of claims 4 to 7, wherein the first insulating layer is composed of any one of natural rubber, EPDM, ABS resin, and PTFE.

9. A transmission unit used for a non-contact power transmission system which can transmit power by arranging a transmission electrode and a reception electrode to be close to each other:
wherein the transmission unit comprises an electrode and a functional composite material layer in this order;
wherein the functional composite material layer is obtained by dispersing conductive filler in a polymer material;
wherein an amount of the conductive filler added in the functional composite material layer is 90 parts by mass or less with respect to 100 parts by mass of the polymer material; and
wherein a conductivity of the functional composite material layer is 10 S/m or higher.

10. The transmission unit used for a non-contact power transmission system according to claim 9, wherein a first insulating layer is formed on the functional composite material layer.

11. The transmission unit used for a non-contact power transmission system according to claim 9 or 10, wherein the first insulating layer is composed of a polymer material having a volume resistivity of 1×10¹⁰ Ω·cm or higher.

12. The transmission unit used for a non-contact power transmission system according to claim 10 or 11, wherein the first insulating layer is composed of any one of natural rubber, EPDM, ABS resin, and PTFE.

13. The transmission unit used for a non-contact power transmission system according to any one of claims 9 to 12, wherein a second insulating layer is formed between the electrode and the functional composite material layer.

14. The transmission unit used for a non-contact power transmission system according to claim 13, wherein the second insulating layer is composed of a polymer material having a volume resistivity of 1×10¹⁰ Ω·cm or higher.

15. The transmission unit used for a non-contact power transmission system according to claim 13 or 14, wherein the second insulating layer is composed of any one of natural rubber, EPDM, ABS resin, PTFE, and a cyano acrylate-based adhesive such as ethyl cyanoacrylate.

16. The transmission unit used for a non-contact power transmission system according to any one of claims 13 to 15, wherein the electrode is composed of a conductor including an elastomer and a carbon fiber.

17. A transmission unit used for a non-contact power transmission system which can transmit power by arranging a transmission electrode and a reception electrode to be close to each other:
wherein the transmission unit comprises an electrode, a functional composite material layer and a first insulating layer in this order; and
wherein the functional composite material layer is composed of a composite material including a polymer material and conductive filler.

18. The transmission unit used for a non-contact power transmission system according to claim 17, wherein the first insulating layer is composed of any one of natural rubber, EPDM, ABS resin, and PTFE.

19. The transmission unit used for a non-contact power transmission system according to claim 17 or 18, wherein a second insulating layer is composed between the electrode and the functional composite material layer.

20. The transmission unit used for a non-contact power transmission system according to claim 19, wherein the second insulating layer is composed of any one of natural rubber, EPDM, ABS resin, PTFE, and a cyano acrylate-based adhesive such as ethyl cyanoacrylate.

21. The transmission unit used for a non-contact power transmission system according to any one of claims 17 to 20, wherein the electrode is composed of a conductor including an elastomer and a carbon fiber.

22. A non-contact power transmission system comprising the transmission sheet used for a non-contact power transmission system according to any one of claims 1 to 8.

23. A non-contact power transmission system comprising the transmission unit used for a non-contact power transmission system according to any one of claims 9 to 21.
